# EUROPEAN PATENT APPLICATION

(11) **EP 1 914 014 A1**
(43) Date of publication of application: **23.04.2008**
(21) Application number: 06768025.6
(22) Date of filing: 10.07.2006
(51) Int. Cl.: B09B 3/00, A62D 3/00, B01D 65/02

(54) **METHOD OF DETOXIFICATION TREATMENT FOR FILTER WITH PERSISTENT SUBSTANCE ADHERING THERETO**

(30) Priority: 28.07.2005 JP 2005218374
(71) Applicant: Idemitsu Kosan Co., Ltd., Chiyoda-ku Tokyo 100-8321 (JP)
(72) Inventor: MURAMOTO, Takahisa, 2990293 (JP); MORIMITSU, Kozo, 2990293 (JP); MACHIDA, Masashi, 2990293 (JP); YOSHIOKA, Yoshiyuki, 2990293 (JP)
(74) Representative: Vossius & Partner
(86) International application number: PCT/JP2006/313663
(87) International publication number: WO 2007/013285

(57) **Abstract**

A method for detoxifying a filter including the step of subjecting a filter with a hardly decomposable substance adhering thereto to chemical decomposition without desorbing the hardly decomposable substance from the filter.

## Description

### TECHNICAL FIELD

The invention relates to a method for detoxifying a filter with a hardly decomposable substance adhering thereto which is used in treating water containing a hardly decomposable substance such as dioxins and other endocrine-disrupting substances.

### BACKGROUND

In Japan, a law concerning special measures against dioxins was enacted in 1999, which regulates the emission standard value of dioxins to 10 pg-TEQ/L or less. However, discharged water caused by the demolition of incinerators, discharged water from particular industrial institutions, or part of water seeping from soil may contain dioxins at a concentration larger than the regulated amount. Therefore, development of a technology for reducing or removing dioxins is strongly desired.

Other than dioxins, endocrine-disrupting substances (the so-called environmental endocrine disruptors or endocrine-disrupting chemicals) such as bisphenols, and various organic chlorine compounds represented by trichloroethane are also hardly decomposable substances, and their emission standard values are stipulated. As in the case of the dioxins, techniques for reducing or removing these substances are strongly desired.

As the method for removing the hardly decomposable substances such as dioxins from discharged water which contains these hardly decomposable substances (contaminated water), chemical decomposition of dioxins in which discharged water is directly subjected to an ozone treatment, a photodegradation treatment, or a treatment with hydrogen peroxide, decomposition of dioxins with microorganisms or removal/separation using an adsorbent or a flocculating agent have been conducted. However, these separating and removing techniques are not preferable since they are not only inefficient but also require a great deal of equipment investment since a diluted liquid is directly treated. Further, when discharged water is badly contaminated, there may be some unfavorable cases where the emission standard value cannot be fulfilled even though the above techniques have been applied.

As the method for detoxifying these hardly decomposable organic compounds, for example, as the method for removing dioxins, methods are known in which dioxins are chemically decomposed with ozone, photodegradated, or decomposed with hydrogen peroxide, decomposed with microorganisms, or separated/removed using an absorbent or a flocculating agent. Of these techniques, adding an oxidant to dioxins to detoxify them by chemical decomposition is employed due to ready operation. As the oxidant for chemically decomposing dioxins, use of persulfate has been proposed (Patent Document 1 and Patent Document 2, for example).

On the other hand, a method for treating discharged water is reported which comprises subjecting contaminated water to a settling treatment, filtering with a net having an average pore diameter of 10 to 100 µm, irradiating the filtrate with ultraviolet light in the presence of photocatalyst powder to perform catalytic cracking, and then treating it with an ultrafilter membrane (Patent Document 3, for example).
Also proposed is a treatment method in which discharged water is separated with a reverse osmosis membrane (RO membrane) and a concentrated liquid is then subjected to oxidization in which the concentrated liquid is chemically decomposed with active oxygen (Patent Document 4 and Patent Document 5, for example).

Further, as the technique for preventing discharge of a hardly decomposable substance, physical methods, chemical methods, and biological methods are known, for example. The physical methods include the adsorption method. Specifically, a method in which activated carbon is introduced into water (see Non-patent document 1, for example) and a method in which activated carbon is introduced into a discharged gas have been developed. In this case, however, activated carbon that has once adsorbed a hardly decomposable substance still holds the hardly decomposable substance internally, and therefore, it cannot be discarded as it is.

The activated carbon used for the above adsorption is discarded by incineration, thermal decomposition or landfill. However, this method involves the risk that an adsorbate may be discharged together with a discharged gas to cause secondary pollution, or may seep out from the land where it is filled to cause re-contamination. Under such circumstances, a safe and economical treatment method is desired.

As the method for decomposing a hardly decomposable substance contained in discharged water, soil or sludge, a thermal decomposition method, a chemical decomposition method using an alkali, a method using a supercritical liquid, and a method using a combination of ozone, peroxide such as hydrogen peroxide or hydrochlorite with ultraviolet light, or the like can be given. In addition to those, biological methods using white-rot fungi or enzymes produced by microorganisms are under investigation.

These methods each have their own merits and demerits. Therefore, while some methods can be easily applied, others cannot be easily applied, depending upon the state of existence of a hardly decomposable substance. For example, thermal decomposition or decomposition using supercritical water requires expensive facilities or energy, and there are many cases where they cannot be put into practice from an economical viewpoint. Further, a method using a combination of ozone or hydrogen peroxide with ultraviolet light cannot be applied to a suspension that does not easily transmit ultraviolet light or a solid such as soil or sludge. Therefore, discharged water containing a suspended substance or a wafting substance is treated after the suspended substance or wafting substance is once removed by filtering or settling for its separation. A hardly decomposable substance adsorbed on the suspended substance or wafting substance needs to be detoxified separately.

With regard to discharged water, further, various chemical decomposition methods including a chemical decomposition method using a combination of hydrogen peroxide with an iron salt and a chemical decomposition method using persulfate or permanganate were proposed.
For example, Patent document 6 discloses a treatment method that can remove an endocrine-disrupting chemical with a simple device and an easy operation for a short period of time, whereby the concentration thereof can be reduced to a low level. In this method, an endocrine-disrupting chemical in water is adsorbed on activated carbon, or the like, concentrated by desorption thereof, and a peroxide such as persulfate is brought into contact with the resultant concentrated liquid to perform decomposition. In general, harmful substances such as an endocrine-disrupting chemical cause a problem that, as operation becomes complicated, possibility of re-contaminating a human body or an ambient environment will increase.

Therefore, if a hardly decomposable substance adsorbed on a solid can be decomposed as it is without being eluted, the operation is simple and it is possible to avoid the risk of the re-contamination of a human body or an ambient environment. Further, there are many industrial advantages that an adsorbent used for separation of a hardly decomposable substance can be reused, that a substance treated can be transported, and that the method can be applied to solid contaminants of soil or sludge. Therefore, the development of such a technology has been long awaited.

The treatment of discharged water containing a hardly decomposable substance will be further described in more detail below.
Among sources known for generating discharged water containing a hardly decomposable substance are the following: chlorine-bleaching equipment in a kraft pulp production plant, equipment for the decomposition of disposed PCB (polychlorobiphenyl) or a substance resulting from the treatment of PCB, equipment for washing a PCB-contaminated substance or a substance resulting from the treatment of PCB, waste gas cleaning equipment of a melting furnace, etc., for the production of aluminum or aluminum alloy, wet-type dust collecting equipment, a waste pit that discharges contaminated water, and other similar sources.

Further, the Environmental Agency has amended the standard for water environment contaminants, and organic compounds such as trichloroethylene, tetrachloroethylene, PCB, or the like, have been newly added to the environmental standard object substances which heretofore mainly included heavy metals.

There has heretofore been developed a technique for removing a hardly decomposable substance as much as possible from water to be treated which contains such a hardly decomposable substance using a filter device, a membrane separation method, or the like, and decomposing the hardly decomposable substance in the water treated (see Patent Document 7, for example).

For treating discharged water containing a hardly decomposable substance in the above-mentioned manner, a filtering treatment, a biological treatment, etc., are carried out as pre-treatments, and an ozone treatment, an ultraviolet irradiation treatment, a catalytic treatment or an activated carbon treatment is carried out as a post treatment. As is understood from the above, conventional decomposition and removal treatments required a great deal of labor and a large amount of materials.

In the case of an ultraviolet irradiation treatment, for example, there is the problem that it can be applied only to a reaction system which transmits ultraviolet light and cannot be applied to a solid-containing liquid or a solid. Moreover, a hardly decomposable substance removed by the pre-treatment needs to be detoxified separately to prevent secondary pollution.

It is therefore strongly desired to develop a technique for efficiently decomposing these hardly decomposable substances in a closed system which is free from the fear of re-contaminating a human body and an ambient environment.

Patent Document 1: JP-A-2003-93999
Patent Document 2: JP-A-2003-285043
Patent Document 3: JP-A-2003-144857
Patent Document 4: JP-A-11-347591
Patent Document 5: JP-A-2000-354894
Patent Document 6: JP-A-2000-189945
Patent Document 7: JP-A-11-99395
Non-patent document 1: "Countermeasure techniques against dioxins" under the editorship of Naomichi HIRAYAMA, issued by CMC, pages 197-205 (1998)

However, when a hardly decomposable organic compound is chemically decomposed by adding persulfate to such a hardly decomposable organic compound as disclosed in the above-mentioned Patent Document 1 or Patent Document 2, the decomposition efficiency of the hardly decomposable organic compound is low. Therefore, it is extremely difficult to decompose the compound when it is contained at a high concentration. On the other hand, hardly decomposable organic compounds contained at a high concentration are often treated with persulfate to which a metal salt such as ruthenium salt has been added. However, such a metal salt is very expensive, and the use thereof is not practical from an economical viewpoint.

If a technique as disclosed in Patent Document 3 is applied to discharged water containing a small amount of a solid in a decomposed substance, a layer of a settled solid is not formed on a metal mesh, and a dioxin-containing solid of fine particles of a decomposed substance or dissolved dioxin pass through the metal mesh, and as a result, the treatment is sometimes insufficient.

In techniques disclosed in Patent Document 4 and Patent Document 5, when free chlorine is present in contaminated water, it is required to add an excess amount of a reducing substance such as bisulfite for neutralizing the free chlorine. This bisulfite or the like inhibits the chemical decomposition, and hence, it is hard to assert that such a technique is efficient for separation and removal of a hardly decomposable substance.

The applicants of the invention have proposed, in concentrating and detoxifying hardly decomposable substances such as dioxins contained in contaminated water (raw water to be treated) such as discharged water generated caused by demolishing of incinerators, industrial discharged water from particular institutions, or part of water seeping from soil, a method for treating discharged water which can use a closed system which efficiently decomposes a hardly decomposable substance contained in a solid as it is without performing an operation such as desorbing, as well as to provide an on-site cycle method for treating discharged water in which an adsorbent used for absorption and separation of a hardly decomposable substance is reused, thereby eliminating generation of waste.

By the operation of a treating system of hardly-decomposable-substance-containing water utilizing the above-mentioned membrane separation technique, a filter with the hardly decomposable substance adhering thereto is inevitably generated. Such a filter may be industrial waste containing a hardly decomposable substance in an amount exceeding the emission standard value.
An object of the invention is to sufficiently detoxify on site a filter with a hardly decomposable substance adhering thereto generated in the treatment system of hardly-decomposable-substance-containing water to the emission standard value or less, and to enable the filter to be discarded safely without causing environmental pollution.

### SUMMARY OF THE INVENTION

The inventors made extensive studies to attain the above object, and has found that, by bringing a filter used in the treatment of hardly-decomposable-substance-containing water into contact with a peroxide for oxidation-decomposition of the hardly-decomposable-substance, the concentration of the hardly decomposable substance adhering to the filter can be decreased to a level sufficiently lower than the emission standard value without desorbing the hardly decomposable substance from the filter, and the filter can be discarded safely. The invention has been made based on this finding.

That is, the invention provides the following method for detoxifying a filter.
1. A method for detoxifying a filter comprising the step of subjecting a filter with a hardly decomposable substance adhering thereto to chemical decomposition without desorbing the hardly decomposable substance from the filter.
2. The method for detoxifying a filter according to 1, wherein the filter with a hardly decomposable substance adhering thereto to be treated is a filter used for removing a hardly decomposable substance from hardly-decomposable-substance-containing water.
3. The method for detoxifying a filter according to 1 or 2, wherein the chemical decomposition step is the step of chemically decomposing the hardly decomposable substance adhering to the filter with a peroxide.
4. The method for detoxifying a filter according to 3, wherein the chemical decomposition step is an off-line treatment in which the filter with a hardly decomposable substance adhering thereto is removed from a treatment line of hardly-decomposable-water-containing water.
5. The method for detoxifying a filter according to 3, wherein the chemical decomposition step is an on-line treatment in which the filter with a hardly decomposable substance adhering thereto is isolated from a treatment line of hardly-decomposable-substance-containing water without being removed from the treatment line.
6. The method for detoxifying a filter according to any one of 3 to 5, wherein an aqueous peroxide solution is brought into contact with the filter with a hardly decomposable substance adhering thereto from the upstream side or downstream side of the filter.
7. The method for detoxifying a filter according to any one of 3 to 6, wherein the peroxide is used in an amount of 100 times or larger in molar relative to the amount of the hardly decomposable substance adhering to the filter.
8. The method for detoxifying a filter according to any one of 1 to 7, wherein the filter with a hardly decomposable substance adhering thereto is a filter selected from the group consisting of an ultrafilter membrane (UF membrane), a nano-filter membrane (NF membrane), a microfiltration membrane (MF membrane), and a reverse osmosis membrane (RO membrane).
9. The method for detoxifying a filter according to 3 to 8, wherein the peroxide is persulfate.

According to the invention, a filter used in a treatment system of hardly-decomposable-substance-containing water and having a hardly decomposable substance adhering thereto can be detoxified on site and discarded safely.
In particular, by combining the invention with the aforementioned cycle method for treating hardly-decomposable-substance-containing water proposed by the applicants, all of the hardly decomposable substances can be detoxified on site without the need of transportation or the like of the hardly decomposable substance which causes environmental pollution.

### BRIEF DESCRIPTION OF THE DRAWINGS

FIG. 1 is a diagrammatical view showing an outline of an off-line treatment in the method for detoxifying a filter of the invention;
FIG. 2-1 is a diagrammatical view showing one embodiment of an off-line treatment in the method for detoxifying a filter of the invention in which a flat membrane is used;
FIG. 2-2 is a diagrammatical view showing one embodiment of an off-line treatment in the method for detoxifying a filter of the invention in which a hollow fiber filter is used;
FIG. 3 is a diagrammatical view showing one embodiment of an on-line treatment in the method for detoxifying a filter of the invention;
FIG. 4-1 is a view showing a flow channel 1 of an apparatus used in Example 3;
FIG. 4-2 is a view showing a flow channel 2 of an apparatus used in Example 3; and
FIG. 4-3 is a view showing a flow channel 3 of an apparatus used in Example 3.

### BEST MODE FOR CARRYING OUT THE INVENTION

The invention will be described below in detail.
The method for detoxifying a filter of the invention comprises the step of subjecting a filter with a hardly decomposable substance adhering thereto to chemical decomposition without desorbing the hardly decomposable substance from the filter.

According to the method for detoxifying a filter of the invention, a filter to which a hardly decomposable substance is adhered due to the contact with the hardly decomposable substance, in particular, a filter to which a hardly decomposable substance is adhered during a treatment of hardly-decomposable-substance-containing water which comprises concentrating and removing a hardly decomposable substance in water by membrane filtering is subjected to chemical decomposition without being desorbed from the filter, whereby the filter is detoxified.

### (1) Hardly decomposable substance

Examples of the hardly decomposable substance that is adhered to a filter and can be detoxified by the method for detoxifying a filter of the invention include dioxins that are harmful contaminants in soil or sludge and also include other endocrine-disrupting substances and carcinogenic substances.

The above dioxins include, for example, halogenated dibenzodioxins, halogenated dibenzofurans, PCBs (in particular, coplanar PCBs in which a chlorine atom is substituted at a position other than the ortho-position).

Examples of the halogenated dibenzodioxins include 2,3,7,8-tetrachlorodibenzo-p-dioxin, 1,2,3,7,8-pentachlorodibenzo-p-dioxin, 1,2,3,4,7,8-hexachlorodibenzo-p-dioxin, 1,2,3,4,6,7,8-heptachlorodibenzo-p-dioxin and 1,2,3,4,6,7,8,9-octachlorodibenzo-p-dioxin.

Examples of the halogenated dibenzofurans include 2,3,7,8-tetrachlorodibenzofuran, 1,2,3,7,8-pentachlorodibenzofuran, 1,2,3,4,7,8-hexachlorodibenzofuran, 1,2,3,4,6,7,8-heptachlorodibenzofuran and 1,2,3,4,6,7,8,9-octachlorodibenzofuran.

Examples of the PCBs (in particular, coplanar PCBs in which a chlorine atom is substituted at a position other than the ortho-position) include 3,3',4,4',5-tetrachlorobiphenyl, 3,3',4,4',5-pentachlorobiphenyl and 3,3',4,4',5,5'-hexachlorobiphenyl.

The endocrine-disrupting substances other than dioxins and carcinogenic substances include alkylphenols such as t-butyl phenol, nonyl phenol and octyl phenol, halogenated phenols such as tetrachlorophenol and pentachlorophenol, bisphenols such as 2,2-bis(4-hydroxyphenyl)propane (bisphenol A) and 1-bis(4-hydroxyphenyl)cyclohexane, polycyclic aromatic hydrocarbons such as benzopyrene, chrysene, benzoanthracene, benzofluoranthene and picene, and phthalic esters such as dibutyl phthalate, butyl benzyl phthalate and di-2-ethylhexyl phthalate.

In addition to the above dioxins and PCBs, hardly decomposable organic halogen compounds such as dichloropropane, trichloroethane, trichloroethylene, tetrachloroethylene and dichloroethylene can also be detoxified by chemical decomposition according to the method for treating a filter for detoxification of the invention.

### (2) Filter

The filter which is to be treated in the invention may be any filter which is used in applications where the filter may contact a hardly decomposable substance. In particular, the filter is a filter used for removing a hardly decomposable substance from hardly-decomposable-substance-containing water.
There are no particular restrictions on the type of the filter to be detoxified, insofar as it has contacted the hardly decomposable substance. Examples include an ultrafilter membrane (UF membrane), a nano-filter membrane (NF membrane), a microfiltration membrane (MF membrane), a reverse osmosis membrane (RO membrane), and a pre-filter.
Also, the material, morphology, module or the like of the membrane is not particularly restricted, and the method of the invention can be applied to any type of filter.

The material for constituting the reverse osmosis membrane (hereinafter often referred to as "RO membrane") includes resin materials such as a polyamide material (including cross-linked polyamide and aromatic polyamide materials), an aliphatic amine condensate material, a heterocyclic polymer material, a cellulose acetate material, a polyethylene material, a polyvinyl alcohol material, and a polyether material.
There is no particular restriction on the morphology of the reverse osmosis membrane, and it may be an asymmetric membrane or a composite membrane.
Further, as a membrane module, a flat type module, a hollow fiber type module, a spirally wound type module, a cylindrical (tubular) type module, a pleated type module can be used appropriately.

The material for constituting the nano-filter membrane (NF membrane) includes resin materials such as a polyamide material (including cross-linked polyamide or aromatic polyamide materials), an aliphatic amine condensate material, a heterocyclic polymer material, a cellulose acetate material, a polyethylene material, a polyvinyl alcohol material and a polyether material, and inorganic materials such as ceramics.
The morphology of the nano-filter membrane is not particularly limited, and as in the case of the above reverse osmosis membrane, it can be an asymmetric membrane or a composite membrane.
Further, as a membrane module, a flat type module, a hollow fiber type module, a spirally wound type module, a cylindrical (tubular) type module, a pleated type module, or the like can be used appropriately.

The material for constituting the ultrafilter membrane (UF membrane) includes resin materials such as a cellulose acetate material, a polyacrylonitrile material, a polysulfin material and a polyether sulfone material. The membrane of an inorganic material such as a ceramics membrane or a dynamics membrane may also be used.
There are no particular restrictions on the morphology of the ultrafilter membrane. A porous membrane, an asymmetrical membrane, a composite membrane, or the like can be given.
As a membrane module, a flat type module, a hollow fiber type module, a spirally wound type module, a cylindrical type module, a pleated type module, or the like can be used appropriately.
While the molecular cutoff of the ultrafilter membrane is not particularly limited, there can be used an ultrafilter membrane having a molecular cutoff of approximately 3,000 to 150,000.

The material for constituting the microfiltration membrane (MF membrane) includes resin materials such as a cellulose ester material, a polyacrylonitrile material, a polysulfin material and a polyether sulfone material and inorganic materials such as ceramics and metals.
As for the morphology of the microfiltration membrane, a porous membrane, an asymmetrical membrane, an irradiation etching membrane, an ion exchange membrane or the like can be given.
As for the type of the membrane, a flat membrane, a filter cartridge, a disposal cartridge type, a bug filter and the like can be given.

The material for constituting a pre-filter (PF membrane) includes organic and inorganic materials such as polypropylene, cotton, rayon, glass fibers, and a stacked sintered metal mesh.
As for the morphology of the pre-filter, a spirally wound type filter, a pleated type filter, a cartridge type filter or the like can be given.

### (3) Chemical decomposition step

In the method for detoxifying a filter of the invention, in the chemical decomposition of a hardly decomposable substance adhering to the filter, a peroxide is caused to react with the hardly decomposable substance without desorbing the hardly decomposable substance from the filter, whereby the filter can be detoxified by the decomposition without causing the hardly decomposable substance to fly outside.

Here, the chemical decomposition means decomposition by a common chemical method. Examples include oxidation decomposition or decomposition with a free radical.
The above peroxide for chemically decomposing the hardly decomposable substance may react with the hardly decomposable substance while having the form as a compound as it is. Otherwise, it may react with the hardly decomposable substance in the form of a compound denatured in water, ion, radical, or the like.

The peroxide for use in this step include various metal salts such as permanganate, persulfate, sodium peroxide, barium peroxide, zinc peroxide, cadmium peroxide, potassium peroxide, calcium peroxide and chromium peroxide, hydrogen peroxide, ozone and a system using a metal catalyst and a hydrogen-donating material in combination.
Of these, peroxides that are preferably used as an oxidizing agent are permanganate and persulfate.

The permanganate includes zinc permanganate, cadmium permanganate, potassium permanganate, calcium permanganate, silver permanganate, strontium permanganate, cesium permanganate, sodium permanganate, barium permanganate, magnesium permanganate, lithium permanganate and rubidium permanganate.

The persulfate includes ammonium persulfate, sodium persulfate, potassium persulfate, potassium hydrogen persulfate, lead persulfate and rubidium persulfate. As an oxidizing agent, persulfates such as ammonium persulfate, sodium persulfate and potassium persulfate are particularly preferred. These may be used singly or may be used in combination of two compounds or more of these. The amount thereof based on the molar amount of the hardly decomposable substance which has been adsorbed on the adsorbent is preferably at least 100 times by mole, more preferably in the range of 10⁴ to 10¹² times by mole, still more preferably 10⁷ to 10¹⁰ times by mole. When the molar amount of the peroxide is at least 100 times the molar amount of the hardly decomposable substance, the hardly decomposable substance which has adhered to the filter can be stably chemically decomposed to such an amount that is the emission standard value (3000 pg-TEQ/g) of industrial waste or less even if the concentration of the hardly decomposable substance which has adhered to the filter is high.

The peroxide may be added all at once at the start of the reaction or may be added successively with a predetermined time interval.
The amount of the peroxide can be determined taking the oxidizing power of the peroxide used into account.
Specifically, the amount of the peroxide is preferably 0.01 to 100 mass%, particularly preferably 0.1 to 30 mass%, relative to the filter with the hardly decomposable substance adhering thereto (hardly-decomposable-substance-containing substance).

For promoting the decomposition by the peroxide, it is preferred to allow the peroxide to react with the hardly decomposable substance in a state where the peroxide is dissolved in the water. Further, other oxidizing agents such as hydrogen peroxide and ozone may be co-present.

For carrying out the above decomposition reaction more effectively, further, a suitable amount of an organic solvent may be added to this reaction system. The above organic solvent is suitably selected from hydrocarbons having 2 to 12 carbon atoms, such as n-hexane, toluene, xylene, methylphthalene or the like. An acid such as sulfuric acid may be added to allow the reaction to proceed with an acid such as peroxosulfuric acid being generated.

Persulfate is decomposed by heating to generate bisulfate ion radical, sulfate ion radical and hydroxyl radical, and these radicals decompose the hardly decomposable substance such as dioxins. Since these radicals release electrons for a short period of time, it is preferred that the filter with the hardly decomposable substance adhering thereto be in contact with as many radicals as possible.

The reaction temperature for the chemical decomposition of the hardly decomposable substance adhering to the filter with the peroxide is preferably room temperature to 100°C, more preferably 40°C to 100°C. When the reaction temperature is lower than 40°C, the decomposition may take a longer time.

If the temperature for the chemical decomposition is high, the decomposition rate is increased. For the decomposition treatment at the boiling temperature of water (higher than 100°C when the salt concentration is high) or higher, a pressure vessel is required. Thus, it is preferred to carry out the decomposition treatment under atmospheric pressure at the boiling temperature or lower. In addition, when the decomposition treatment is carried out under atmospheric pressure at the boiling point or higher, water is evaporated and the hardly decomposable substance such as dioxin or the like is also evaporated as the temperature is increased. As a result, waste gas treatment equipment is required to prevent secondary pollution.

When heating is carried out in the invention, the heating method is not specially limited, and any one of an electrical heating method, a hot water supplying method, a water vapor sucking method, a boiler method, or the like can be employed. In the hot water supplying method, it is required to be careful not to increase the content of water to be excessive. When the water content is too large, the concentration of the persulfate for the reaction decreases. While the time period for the chemical decomposition treatment cannot be determined since it is affected by the treatment temperature and other conditions, it is generally approximately 10 minutes to 500 hours.

### (4) Embodiment

Illustrative embodiments of the method for detoxifying a filter of the invention will be explained with reference to the drawings.

### (a) Off-line treatment

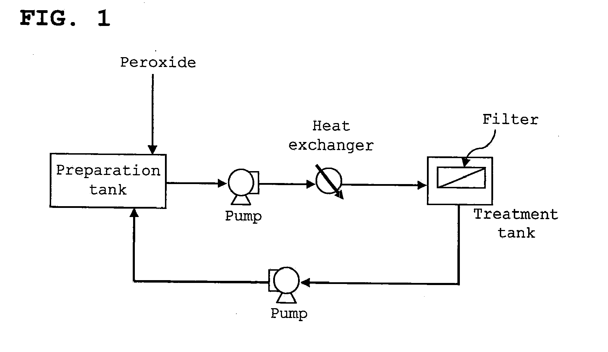

FIG. 1 shows an embodiment in which the filter used in the treatment of the hardly-decomposable-substance-containing water with the hardly decomposable substance adhering thereto is removed from the treatment line for detoxification.
The filter with the hardly decomposable substance adhering thereto is placed in a treatment tank. An aqueous peroxide solution prepared in advance in a preparation tank is circulated by means of a pump through the tank. The peroxide may be added successively depending on the degree of contamination of the filter and the degree of decomposition of the hardly decomposable substance. The hardly decomposable substance is chemically decomposed when brought into contact with the peroxide. Conditions or the like of the chemical decomposition are the same as those mentioned above, and the explanation is omitted here.

The flow amount of the aqueous peroxide solution is preferably an amount which is large enough to allow the filter to be sufficiently immersed.

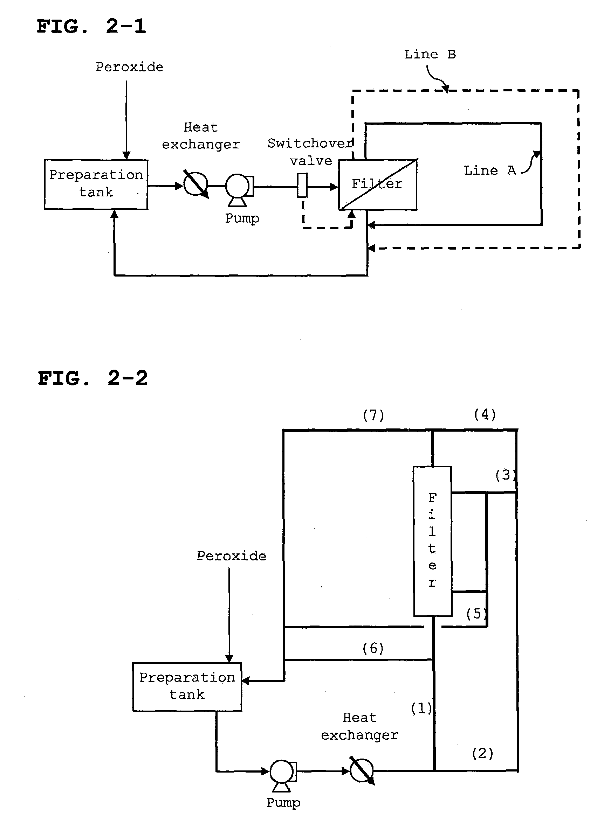

In an embodiment shown in FIG. 2-1, the aqueous peroxide solution is passed through the inside of the flat-type filter from the upstream side and downstream side of the filter, using lines A and B. In an embodiment shown in FIG. 2-2, the aqueous peroxide solution is passed through the filter formed of hollow fibers in a direction parallel to the hollow fiber bundles, a direction perpendicular to the hollow fiber bundles, and a combined direction of these, using lines 1, 2 and 3. This configuration is preferable, since the hardly decomposable substance can be in contact with a large amount of the peroxide, and as a result, chemical decomposition of the hardly decomposable substance to a level below the emission standard value can be ensured.
In these embodiments, it is preferred that the flow amount of the aqueous peroxide solution be large enough to allow the filter to be sufficiently immersed. The operation pressure varies depending on the fractionation capability of the filter, but is preferably 0.1 to 100 times larger than the normal operation pressure.

### (b) On-line treatment

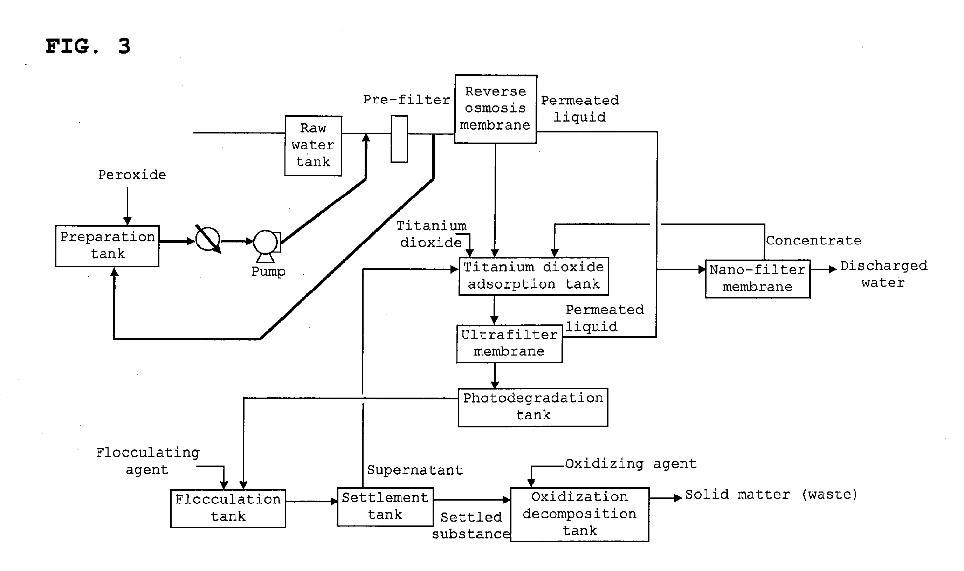

FIG. 3 shows one example of an embodiment in which the filter used in the treatment of hardly-decomposable-substance-containing water and having the hardly decomposable substance adhering thereto is isolated from the treatment line without being removed from the line and subjected to the chemical decomposition treatment. FIG. 3 shows the case in which a pre-filter is detoxified.
In this embodiment, the front and back of a filter on the treatment line are fixed with a valve and a plug or other tools, thereby to isolate the filter from the line. Then, an aqueous peroxide solution which is prepared in advance in a preparation tank is allowed to circulate through the filter utilizing the driving force of a pump, causing the peroxide to be in contact with a hardly decomposable substance, whereby detoxification is carried out. After the detoxification treatment, the treated filter is removed from the line and discarded.

In each embodiment, the filter with the hardly decomposable substance adhering thereto can be detoxified on site and can be discarded safely.
The off-line treatment has such an advantage that a treatment apparatus can be compact and the suspension time of systm for treating hardly-decomposable-substance-containing water can be short. However, in the off-line treatment, the filter with the hardly decomposable substance adhering thereto is required to be removed from the treatment system, and hence, the hardly decomposable substance may contaminate the surroundings of the system.

In the on-line treatment, the filter with the hardly decomposable substance adhering thereto can be detoxified without being removed from the hardly-decomposable-substance-containing-water-treatment system. The on-line treatment is, therefore, free from the fear of contaminating the surroundings of the system. However, the system has to be suspended till the detoxification treatment of the filter is completed. In addition, a plurality of treatment systems are required if the amount of water to be treated is large.

In the on-line treatment, the line is branched at the front and back of a filter and provided with a plurality of filters. As a result, a filter can be used while another filter is detoxified, whereby detoxification of a filter can be carried out simultaneously with the treatment of hardly-decomposable-substance-containing water, without stopping the treatment line of hardly-decomposable-substance-containing water.

### EXAMPLES

The invention will be described in more detail according to the following examples which should not be construed as limiting the scope of the invention.

### Example 1 (FIG. 1)

A microfiltration membrane (MF membrane) with dioxins adhering thereto was detoxified using the treatment apparatus shown in FIG. 1.
A hot water bath (volume: 1 L) (heat exchanger) heated to 95°C was provided between a preparation tank (volume: 2 L) and a treatment tank (volume: 0.5 L). The preparation tank was connected to the treatment tank, through a hot water bath, with a Teflon (registered trademark) tube with a diameter of 0.5 cm. The lower part of the treatment tank was also connected to the preparation tank with a Teflon (registered trademark) tube. A tube pump was provided between the preparation tank and the hot water bath, and between the treatment tank and the preparation tank to allow a downwardly flowing stream to be generated in the treatment tank, as well as to allow the liquid to circulate.
A microfiltration membrane (MF membrane) with a diameter of 11 cm and a pore size of 0.45 µm contaminated with dioxins (dioxin concentration: 6500 pg-TEQ/g) was placed in a treatment tank (volume: 0.5 L). Then, 5% of potassium persulfate was added to the preparation tank (volume: 2 L). The flow rate of the liquid in the treatment tank was adjusted to 1 vvm by means of the tube pump. The aqueous potassium persulfate solution in the treatment tank was maintained at 65°C to 70°C, and the reaction was allowed to proceed for 10 hours.
After the completion of the reaction, the dioxin concentration of the microfiltration film was analyzed. The results confirmed that the dioxin concentration was 850 pg-TEQ/g which was below the emission standard value (3000 pg-TEQ/g).

### Example 2

Using the treatment apparatus shown in FIG. 2-1, a pleated type filter with dioxins adhering thereto was detoxified.
A heat exchanger and a pump were provided between a preparation tank (10 L) and a filter contaminated with dioxins (dioxin concentration: 10000 pg-TEQ/g, pleated type, pore diameter: 2 µm, membrane area: 0.15 m²). A switchover valve was provided between the ejection port of the pump and the filter, whereby line A (a line which is normally used) running from the inlet of the filter to the outlet of the filter, and line B running from the outlet of the filter to the inlet of the filter were provided. As a result, the flow direction of the aqueous persulfate solution (chemicals) could be changed reversibly.
Sodium persulfate was successively added to the preparation tank every 24 hours in such a manner that the concentration of sodium persulfate became 3% within 2 hours. The liquid temperature was kept at 80°C, and the flow direction of the aqueous sodium persulfate solution was reversed every single hour, and the treatment operation was continued for 72 hours (the sodium persulfate was added three times). The flow rate of the aqueous sodium persulfate solution was 10 L/min.
The dioxin concentration of the filter after the treatment was 1050 pg-TEQ/g which was below the emission standard value (3000 pg-TEQ/g).

### Example 3

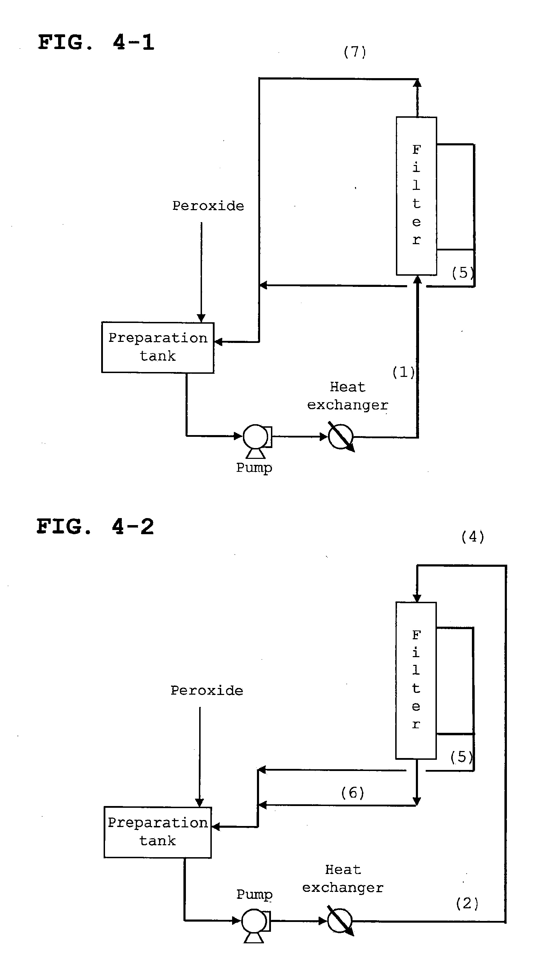

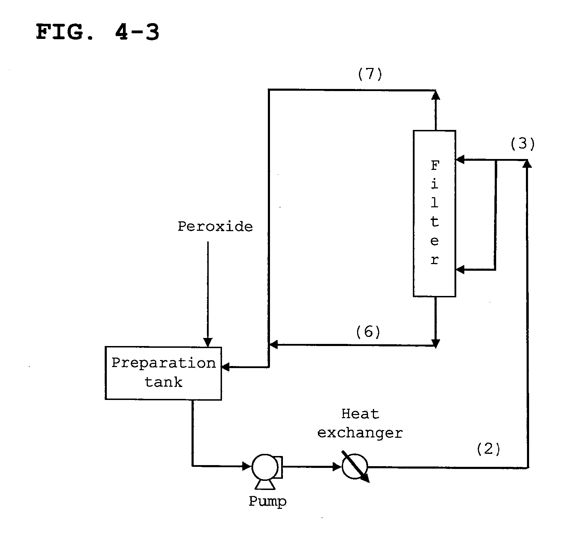

Using the treatment apparatus shown in FIG. 2-2, a hollow fiber type filter with dioxins adhering thereto was detoxified.
A heat exchanger and a pump were provided between a preparation tank (100 L) and a filter contaminated with dioxins (dioxin concentration: 8000 pg-TEQ/g, hollow fiber type, cartridge Φ 16.5 cm, length 106.6 cm). Lines (1) to (7) were provided around the filter, and a valve was provided at a branch of each line. Combination of opening and closure of the valves was as follows.
1. The valves of lines (1), (5) and (7) are open with the valves of lines (2), (3), (4) and (6) being closed
2. The valves of lines (2), (4), (5) and (6) are open with the valves of lines (1), (3) and (7) being closed
3. The valves of lines (2), (3), (6) and (7) are open with the valves of lines (1), (4) and (5) being closed
The flow channel and liquid flow in 1 above are shown in FIG. 4-1, the flow channel and liquid flow in 2 above are shown in FIG. 4-2, and the flow channel and liquid flow in 3 above are shown in FIG. 4-3.
Potassium persulfate was added to the preparation tank successively every 24 hours in such a manner that the concentration of potassium persulfate became 5% within 3 hours. The liquid temperature pf the potassium persulfate solution was kept within a range of 70°C to 80°C, and the prepared liquid (chemicals) was circulated at a flow rate of 30 L/min. The combination of opening and closure of the valve was changed every two hours in the order of 1→2→3→1→2→3 and the treatment operation was carried out for 120 hours (potassium persulfate was added five times).
The dioxin concentration of the filter after the treatment was 500 pg-TEQ/g which was below the emission standard value (3000 pg-TEQ/g).

### Example 4

Using the treatment apparatus provided in the discharge water treatment system shown in FIG. 3, a pre-filter with dioxins adhering thereto was detoxified.
The pre-filter contaminated with dioxins (dioxin concentration: 15000 pg-TEQ/g, pleated type, pore diameter 2 µm, membrane area 0.15 m²) was separated from other steps by valves which had been provided in advance in the discharge water treatment system shown in FIG. 3. The separated line (not shown in detail in FIG. 3) served as a treatment apparatus having the same configuration as the apparatus shown in FIG. 2-1. As in Example 2, sodium peroxide was added successively every 24 hours in such a manner that the concentration of the sodium peroxide became 3% within 2 hours. The liquid temperature was kept at 80°C, and the flow direction of the aqueous sodium persulfate solution was switched every single hour, and the treatment operation was continued for 96 hours (the sodium persulfate was added four times). The flow rate of the aqueous sodium persulfate solution was 10 L/min.
The the dioxin concentration of the filter after the treatment was 1030 pg-TEQ/g which was below the emission standard value (3000 pg-TEQ/g).

### INDUSTRIAL APPLICABILITY

According to the method for detoxifying a filter of the invention, a hardly decomposable substance adhering to a filter used in the treatment of hardly-decomposable-substance-containing water can be detoxified to a level sufficiently below the emission standard value. The detoxified filter can be discarded as usual waste.
Further, if the method for detoxifying a filter of the invention is used in combination with a treatment method that can detoxify hardly decomposable organic compounds such as dioxins and PCBs, contained in industrial discharged water, water seeping out from soil, discharged washing water caused by demolishing of incinerators and their concentrates on the on-site closed system and that can stably bring the concentrations of the hardly decomposable substances in discharged water into values below the emission standard value, all of the hardly decomposable substances contained in hardly-decomposable-substance-containing water can be detoxified.

## Claims

1. A method for detoxifying a filter comprising the step of subjecting a filter with a hardly decomposable substance adhering thereto to chemical decomposition without desorbing the hardly decomposable substance from the filter.

2. The method for detoxifying a filter according to claim 1, wherein the filter with a hardly decomposable substance adhering thereto to be treated is a filter used for removing a hardly decomposable substance from hardly-decomposable-substance-containing water.

3. The method for detoxifying a filter according to claim 1 or 2, wherein the chemical decomposition step is the step of chemically decomposing the hardly decomposable substance adhering to the filter with a peroxide.

4. The method for detoxifying a filter according to claim 3, wherein the chemical decomposition step is an off-line treatment in which the filter with a hardly decomposable substance adhering thereto is removed from a treatment line of hardly-decomposable-water-containing water.

5. The method for detoxifying a filter according to claim 3, wherein the chemical decomposition step is an on-line treatment in which the filter with a hardly decomposable substance adhering thereto is isolated from a treatment line of hardly-decomposable-substance-containing water without being removed from the treatment line.

6. The method for detoxifying a filter according to any one of claims 3 to 5, wherein an aqueous peroxide solution is brought into contact with the filter with a hardly decomposable substance adhering thereto from the upstream side or downstream side of the filter.

7. The method for detoxifying a filter according to any one of claims 3 to 6, wherein the peroxide is used in an amount of 100 times or larger in molar relative to the amount of the hardly decomposable substance adhering to the filter.

8. The method for detoxifying a filter according to any one of claims 1 to 7, wherein the filter with a hardly decomposable substance adhering thereto is a filter selected from the group consisting of an ultrafilter membrane (UF membrane), a nano-filter membrane (NF membrane), a microfiltration membrane (MF membrane), and a reverse osmosis membrane (RO membrane).

9. The method for detoxifying a filter according to claims 3 to 8, wherein the peroxide is persulfate.
